# EUROPEAN PATENT SPECIFICATION

(11) **EP 0 664 105 B1**
(45) Date of publication and mention of the grant of the patent: **26.08.1998**
(21) Application number: 95850009.2
(22) Date of filing: 11.01.1995
(51) Int. Cl.: A61C 1/05

(54) **Method and system of control for prevention of sucking-back in turbine-operated dental-treatment instruments**
Regelungsverfahren und -system zur Rücksaugvermeidung bei mit Turbinen angetriebenen dentalen Behandlungsinstrumenten
Procédé et système de commande pour la prévention d'aspiration en arrière dans les instruments de traitement dentaire avec entraînement de turbine

(30) Priority: 19.01.1994 FI 940258
(43) Date of publication of application: 26.07.1995
(73) Proprietor: PLANMECA OY, 00810 Helsinki (FI)
(72) Inventor: Nyholm, Küstaa, SF-02570 Sjundea Kb (FI); Virta, Arto, SF-00930 Helsinki (FI); Hyvärinen, Pentti, SF-00950 Helsinki (FI); de Godzinsky, Christian, SF-00950 Helsinki (FI)
(74) Representative: Onn, Thorsten

(56) References cited:
- DE-A- 3 719 149
- US-A- 5 074 787

## Description

The invention concerns a method in a dental-treatment instrument, which comprises a turbine which is operated by means of the pressure of a drive medium, such as compressed air, and which rotates the tool of the dental-treatment instrument, in which method the pressure of the drive medium is controlled down with a retarded profile so as to prevent the sucking-back that arises because of continuation of the rotation of the turbine rotor in the instrument in connection with the switching-off of the pressure of the drive medium.

Further, the invention concerns systems of control intended for reducing the sucking-back in turbines operating by means of a pressure medium in a dental-treatment machine, in which systems the drive medium is passed to one dental-treatment instrument or to several dental-treatment instruments through a pressure regulation member and in which systems said pressure regulation member is connected to a pressure regulation unit, by whose means the pressure of the drive medium is arranged to be run down with a retarded run-down profile so that detrimental sucking-back does not occur.

As is known from the prior art, various dental-treatment instruments, such as burs, are operated by means of a turbine-operated rotation device. Typically, a compressed-air operated turbine comprises a housing, in whose interior the turbine rotor is mounted revolving. As a rule, this rotor is operated with an air pressure of about 2...3 bars at high speeds of rotation, of an order of 300,000...500,000 r.p.m.

As is known from the prior art, the operation of the turbine is switched off by closing the compressed-air valve abruptly. Then, owing to its kinetic energy, the rotor of the turbine continues its rotation, so that the turbine starts operating as an air pump. This is why a negative pressure is formed in the area of the environment of the shaft of the turbine in the dental-treatment instrument. This results in the considerable drawback that the negative pressure sucks substances from the environment, such as saliva and blood of the patient, into the turbine. This is why the interior of the turbine may be contaminated so that the interior parts of the turbine must also be cleaned, which is quite difficult. Thus, there is a risk that pathogenic contaminations are spread from one patient to the other through a prior-art turbine-operated dental-treatment instrument.

The problems mentioned above have already been recognized partly also earlier, and some suggestions have been made for solution of said problems. In this respect, reference is made, by way of example, to the US Patent No. 5,074,787. According to the prior art represented in said cited patent, after the high-pressure air to the turbine of the instrument has been stopped, low-pressure air is passed into the interior of the instrument by means of a change-over valve arrangement. By means of the low-pressure air, attempts are made to prevent the sucking-back described above and the drawbacks arising from same. The device and the realization of the device in accordance with the cited patent are, however, quite complicated, because a separate low-pressure air source and a complicated change-over valve arrangement as well as a control system for same are required. It can also be considered to be a drawback that the device in accordance with the cited patent cannot be fitted in existing dental-treatment machines without substantial changes in construction and substantial installation work.

With respect to the prior art related to the present invention, reference is made further to the following patent literature: DE-3,719,149, US-3,052,984, US-3,865,505, US-3,963,391, US-4,494,933, EP-0,293,342, EP-0,328,492, EP-0,366,849, SE-399,176, and CH-464,438.

The general object of the present invention is further development of the prior art described above and elimination of the drawbacks that have occurred in same.

It is a particular object of the invention to provide a method and a control system whose construction and realization are quite simple and by whose means the sucking-back and its detrimental effects can be prevented efficiently.

It is a further object of the invention to provide a method and a control arrangement which can be taken into use in existing dental-treatment machines, in particular in those supplied by the applicant, substantially just by means of a change in the programming of the control system.

In view of achieving the objectives stated above and those that will come out later, the method of the invention is mainly characterized in that, into the unit for regulation of the pressure of the drive medium, said retarded run-down profile of the pressure of the drive medium is programmed, by means of which profile the pressure regulation member is controlled, which is connected to the pressure inlet line of the drive medium of the dental-treatment instrument.

On the other hand, a first embodiment of the control system in accordance with the invention is mainly characterized in that the pressure regulation member is connected with a pressure regulation unit, into which a certain pressure run-down profile has been stored or controlled by means of programming.

In the present invention, the drive pressure of the turbine in the dental-treatment instrument is not switched-off abruptly or by means of direct control by the operator, but the pressure of the drive medium is controlled down with a profile that is controlled and retarded by means of programming. This profile may consist of linear parts of different angle coefficients, or the run-down profile may be a smoothly continuing, for example, exponential curve. Said run-down profile is accomplished, for example, by storing the corresponding control function, in a table form or otherwise, in the memory of a microprocessor. In the invention, as the drive-pressure regulation member, it is possible to use regulation members in themselves known, such as proportional magnetic valves.

In the following, the invention will be described in detail with reference to the test arrangements illustrated in the figures in the accompanying drawing and to some exemplifying embodiments of the invention, the invention being by no means strictly confined to the details of said embodiments.

Figures 1A and 1B illustrate a test arrangement by whose means the sucking-back of a dental-treatment instrument was examined.

Figure 2 is a central vertical sectional view of a typical turbine-operated dental-treatment instrument in connection with which the invention can be applied.

Figure 3 is a horizontal sectional view taken along the line III-III in Fig. 2.

Figure 4 is a schematic illustration of a first exemplifying embodiment of the invention.

Figure 5 is a schematic illustration, corresponding to Fig. 4, of a second exemplifying embodiment of the invention.

Figure 6 is a schematic illustration of a third exemplifying embodiment of the invention.

Figure 7 is a schematic illustration of an embodiment of the invention in a dental-treatment machine in which there are three turbine-operated treatment instruments placed side by side.

Figure 8A shows a first exemplifying embodiment of a first run-down profile of the operating pressure in accordance with the invention.

Figure 8B shows, in a way similar to Fig. 8A, a second, alternative run-down profile of the operating pressure to be applied in the invention.

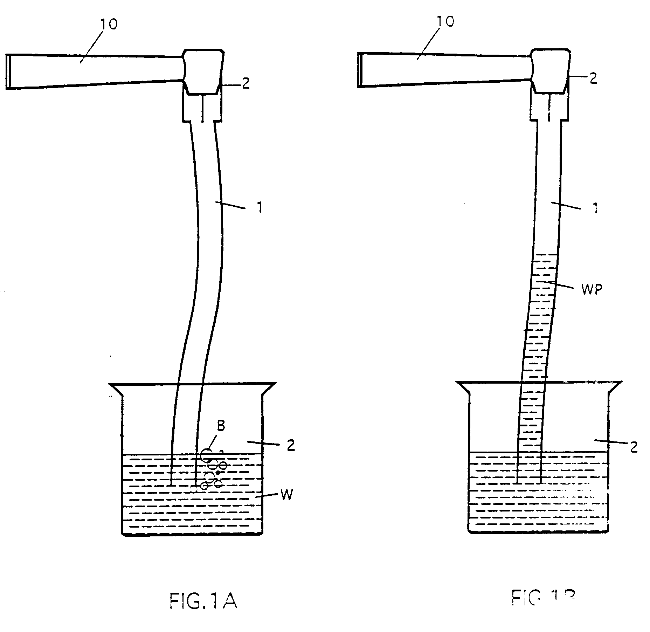

The sucking-back effect of the dental-treatment instrument 10 was examined by means of a test arrangement as shown in Figs. 1A and 1B, wherein a hose is attached around the head of the instrument 10 so that the upper end 2 of the hose 1 is air-tight around the body of the instrument 10 and the air openings in the body of the instrument 10 communicate with the interior of the hose 1. The bottom end of the hose 1 is placed in a vessel 2 below the water level. When the instrument 10 is operated, some of the drive medium and of the other materials inside the instrument flow out of the body of the instrument 10 through the openings in same, which is shown in the test arrangement as bubbles B in the water W. When the drive pressure of the instrument 10 is switched off in a way known from the prior art so as to stop the instrument 10 (Fig. 1B), the turbine continues its rotation because of the kinetic energy stored in it and, then, operates as a suction pump. This produces a negative pressure in the interior of the instrument 10, which sucks materials from the environment (saliva, blood) through the openings in the turbine body into the turbine interior, which is seen in the test arrangement as a water column WP rising into the hose 1. As a result of said suction and blow phenomenon, the instrument may transfer pathogenic contaminations from one patient to the other if the cleaning of the instrument between patients has not been fully successful. Especially the cleaning of the interior parts of the instrument is a difficult and complicated operation. By means of the present invention, contamination of the interior of the instrument with pathogens can be reduced essentially, and so can also the risk that pathogens are transferred through the instrument be reduced essentially.

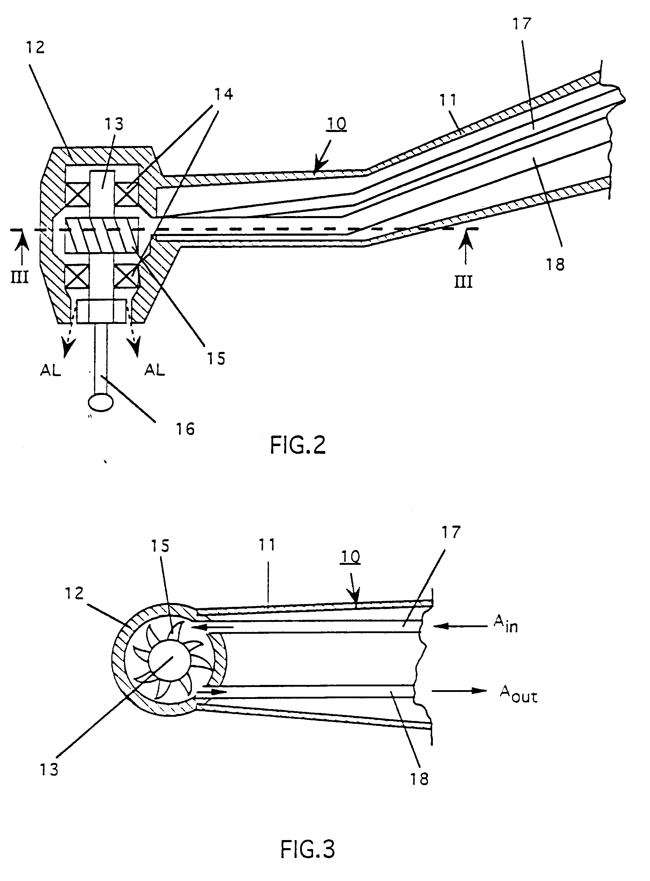

Figs. 2 and 3 show an exemplifying embodiment of a dental-treatment instrument in connection with which the invention can be applied. The instrument 10 comprises a hand-piece 11, at whose end there is the frame housing 12 of the drive turbine. Inside the frame housing 12, the rotor 15 of the turbine is fitted revolving on the shaft 13. To the outer end of the shaft 13, which is provided with bearings 14, the dental-treatment tool, such as a bur 16, is attached. The rotor 15 is operated by means of compressed air supplied through the inlet pipe 17 in the direction of the arrow Aᵢₙ, the pressure of said air being typically p = ≈ 2...3 bars. Into the rotor 15 casing, the outlet pipe 18 for the drive medium is opened, through which pipe the drive medium is allowed to be discharged out in the direction of the arrow Aₒᵤₜ. When the bur 16 is operated, air is also discharged in the direction of the arrows AL. With respect to the above, it should be emphasized that the dental-treatment instrument shown in Figs. 2 and 3 is just an example of the environment of application of the invention, and the invention can also be applied in many other, different environments, and as the drive medium it is also possible to use some substance other than compressed air, such as pressurized gas or liquid.

The first embodiment of the invention described above is also suitable for use in such turbines, which were quite common previously, in which there is no return pipe 18 for the drive medium. Thus, in this turbine type, the other embodiment of the invention cannot be applied in which a closing valve has been fitted in the return line for the pressure of the drive medium.

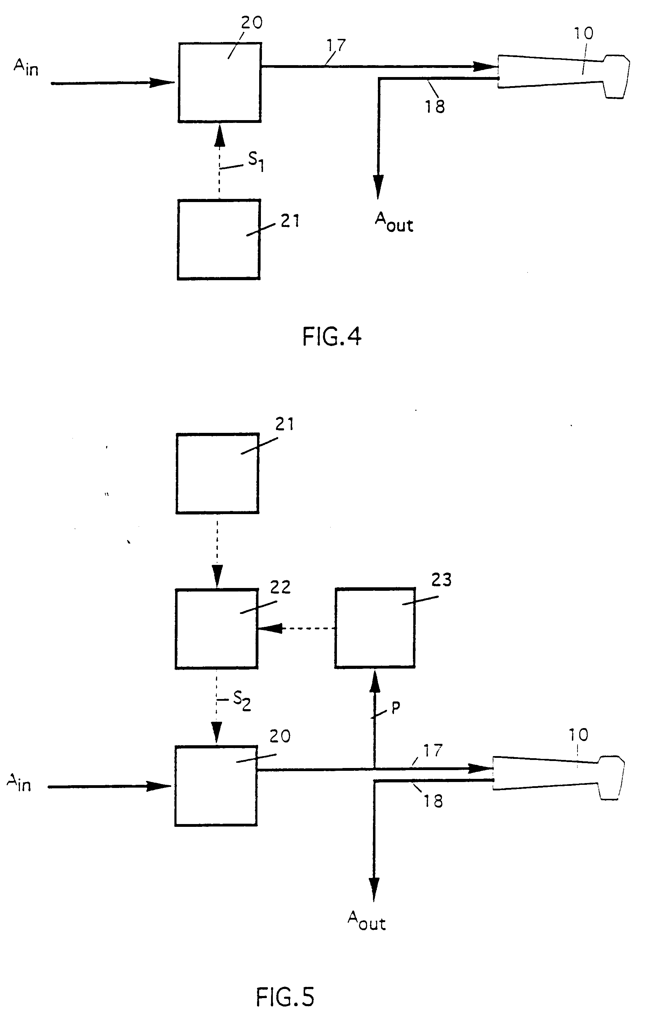

Fig. 4 illustrates a first exemplifying embodiment of a control system that makes use of the method in accordance with the invention. The drive medium of the instrument 10, such as compressed air, is introduced in the direction of the arrow Aᵢₙ through the pressure regulation member 20 into the inlet pipe 17, and the drive medium is removed from the instrument 10 through the discharge pipe 18 in the direction of the arrow Aₒᵤₜ. The member of regulation 20 of the operating pressure is connected with the regulation signal s₁ of the pressure regulation unit 21. In the prior-art systems, the pressure of the drive medium is controlled by means of the regulation unit 21 under direct control by the operator, as a rule. so that, by means of the control impulse of the operator, the pressure regulation valve 20 is closed abruptly, which results in the drawbacks discussed above. In the present invention, by means of the regulation unit 21, the running-down of the operating pressure p of the turbine is carried out with a controlled profile gradually and as appropriately retarded so that no sucking-back occurs.

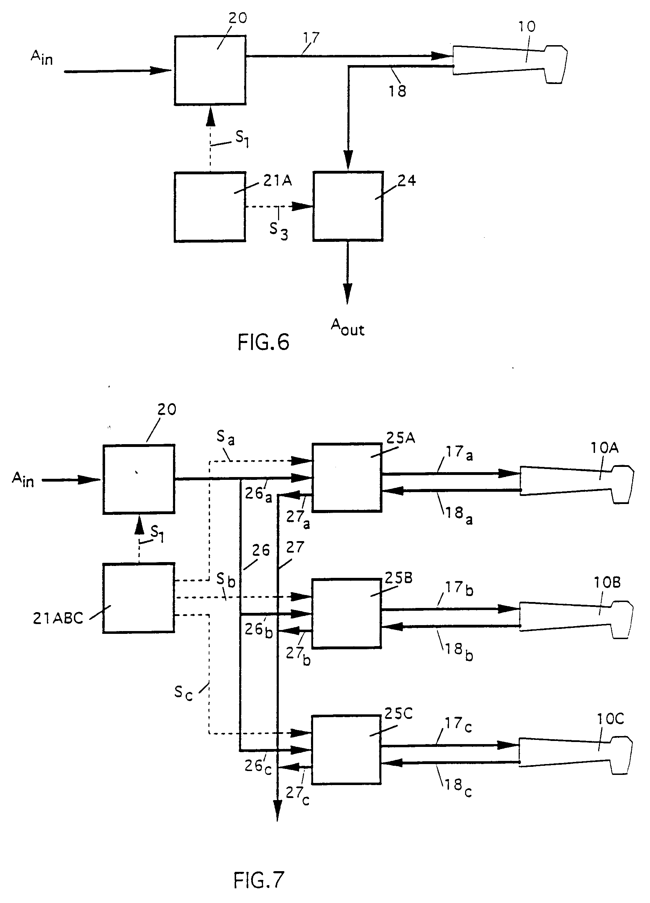

Fig. 5 shows a second exemplifying embodiment of the invention, in which the pressure p of the drive medium of the instrument 10, present in the inlet pipe 17, is measured by means of a pressure measurement unit 23. By means of the unit 23, a regulation amplifier 22 is controlled, which amplifier is additionally controlled by the regulation unit 21. By means of the regulation signal s₂ of the regulation amplifier 22, the pressure regulation member 20 is controlled in the same way as a proportional regulation valve is controlled, so that the operating pressure p of the turbine of the instrument 10 can be run down with a controlled and retarded profile so that no sucking-back occurs.

Fig. 6 shows a third exemplifying embodiment of the invention, in which, in the same way as in Fig. 4, the pressure regulation member 20 is controlled by means of the regulation signal s₁ of the regulation unit 21A. Further, by means of the regulation unit 21A, a pressure regulation member 24, such as a pressure regulation valve, which is fitted in the discharge duct 18 for the drive medium of the turbine, is controlled. The variation of the invention shown in Fig. 6 can also be accomplished so that there is no pressure regulation member 20, but the controlled running-down of the pressure of the drive medium takes place exclusively by means of the regulation member 24 by the effect of the control signal s₃.

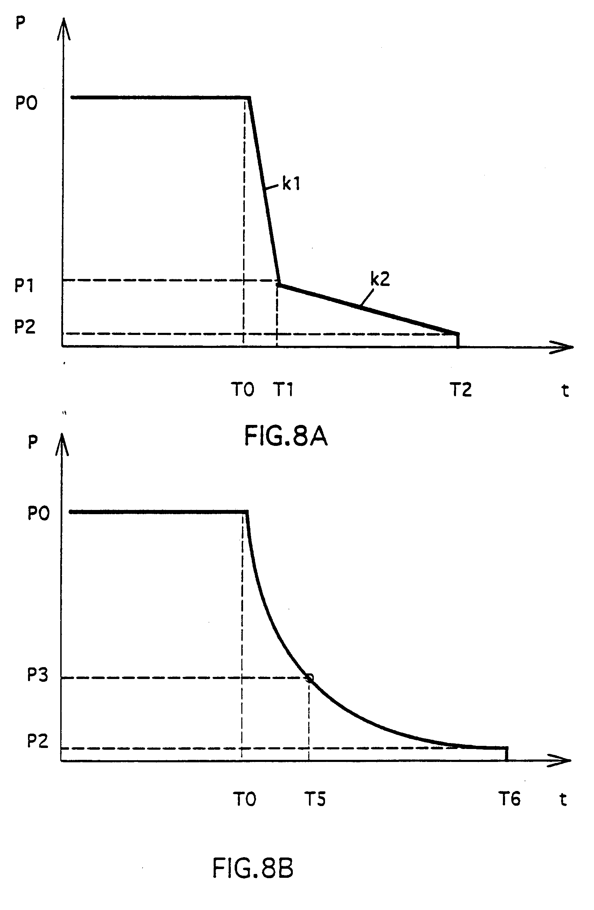

Fig. 7 shows an application of the invention to a prior-art multi-instrument treatment machine, which comprises the instruments 10A, 10B and 10C, each of which is connected with the inlet and outlet pipes 17 and 18 for the drive medium of the operating turbines from the pressure regulation units 25A, 25B and 25C. For the different instruments 10A, 10B and 10C, the drive media are fed in the direction of the arrow Aᵢₙ through a common pressure regulation member 20 into the inlet pipe 26, from which the connecting pipes 26a,26b and 26c for drive medium are branched to each unit 25A, 25B and 25C. Similarly, through the pressure regulation units 25A, 25B and 25C, the discharge pipes 18 for the drive medium are connected through connecting pipes 27a,27b and 27c to the common discharge pipe 27 for the drive medium. By means of the control signal s₁ of the regulation unit 21ABC, the pressure regulation member 20 is controlled. Further, from the unit 21ABC, the control valve 25A, 25B and 25C of each instrument 10A, 10B, 10C is controlled by means of the regulation signals sₐ,s_{b} and s_{c}. By means of the regulation signals s₁,sₐ,s_{b} and s_{c}, the feed of the drive medium to each instrument 10A,10B,10C can be switched off in accordance with the invention under control and with a retarded run-down profile. Of these profiles, some particularly favourable exemplifying embodiments are shown in Figs. 8A and 8B.

According to Fig. 8A, the operating pressure p₀ of the turbine 15 is at the level p₀ ≈ 2...3 bars, typically p₀ ≈ 2.2 bars. When the turbine 15 is stopped, as is shown in Fig. 8A, at the point of time T₀, the pressure p is controlled in a linear way to the pressure p₁ ≈ 0.5 bar within the time period T₁-T₀, which is typically T₁-T₀ ≈ 300 ms. In the example given above, during the period of time T₁-T₀, the angle coefficient k₁ of the pressure run-down profile is k₁ ≈ -5.7 bars per second, as a rule, k₁ ≈ -3...-10 bars/s. At the point of time T₁, the profile of the running-down of the operating pressure p is made substantially less steep, to take place with the angle coefficient k₂, the pressure being lowered by the point of time T₂ to the level p₂ ≈ 0.35 bar within the time period of T₂-T₁ ≈ 1000 ms. At the point of time T₂, the pressure p can be lowered abruptly to zero. The angle coefficient k₂ ≈ -0.15 bar/s, typically k₂ ≈ -0.1...-0.5 bar/s.

Differing from Fig. 8A, in Fig. 8B the operating pressure p of the turbine is lowered from the level p₀ to the level p₂ exponentially. Typically, p₀-p₃ ≈ 1.8 bars, and T₅-T₀ ≈ 1500 ms. The pressure level p₂ ≈ 0.35 bar is reached typically at the point of time T₆ ≈ T₀ + 300 ms, after which the pressure p can be lowered rapidly to zero. As a control signal s₁;sₐ,s_{b},s_{c};s₃ for the run-down profile of the operating pressure p, it is also possible to use a control signal stored in the memory of a microprocessor, for example, in table form.

In the invention, as the pressure regulation member 20;25A,25B,25C, it is possible to use, for example, a proportional magnetic valve or some other, corresponding, pressure regulation valve in itself known.

### Test example

A dental-treatment machine marketed by the applicant was provided with a control system in accordance with the invention, to which system, to begin with, a run-down profile p(t) in accordance with Fig. 8A for the operating pressure of the instrument 10 had been stored by means of programming, in which profile p₀ ≈ 2.2 bars, T₁-T₀ ≈ 300 ms, p₁ ≈ 0.5 bar, p₂ ≈ 0.35 bar, T₂-T₁ ≈ 1000 ms. A test in accordance with Figs. 1A and 1B was carried out, in which, when the instrument 10 was in operation, bubbling B was noticed in the water vessel 2. After this, the running-down (t) of the operating pressure p in accordance with Fig. 8 was carried out, in which connection, in the stage as shown in Fig. 1B, the water column WP did not rise at all into the hose 1, from which it could be concluded that the invention had prevented the sucking-back. A corresponding test was carried out with an operating-pressure run-down profile in accordance with Fig. 8B, wherein p₀ ≈ 2.2 bars, p₃ ≈ 0.5 bar, p₂ ≈ 0.35 bar, T₅-T₀ ≈ 1500 ms, and t₆-T₁ ≈ 3000 ms. The test described above was carried out (Figs. 1A and 1B), and it was noticed that, in the stage of running-down p(t) of the operating pressure in accordance with the invention, the water column WP did not rise into the hose 1 at all, from which it could be concluded that, when a run-down profile p(t) of the operating pressure as shown in Fig. 8B is used, no sucking-back occurs.

In the following, the patent claims will be given, and the various details of the invention may show variation within the scope of the inventive idea defined in said claims.

## Claims

1. A method in a dental-treatment instrument, which comprises a turbine which is operated by means of the pressure (p) of a drive medium, such as compressed air, and which rotates the tool (16) of the dental-treatment instrument (10), in which method the pressure (p) of the drive medium is controlled down with a retarded profile (p(t)) so as to prevent the sucking-back that arises because of continuation of the rotation of the turbine rotor (15) in the instrument (10) in connection with the switching-off of the pressure (p) of the drive medium, **characterized** in that, into the unit (21;22,23;21,24;21A,21B,21C,25a,25b,25c) for regulation of the pressure (p) of the drive medium, said retarded run-down profile (p(t)) of the pressure (p) of the drive medium is programmed, by means of which profile the pressure regulation member (20) is controlled, which is connected to the pressure (p) inlet line (17) of the drive medium of the dental-treatment instrument.

2. A method as claimed in claim 1, **characterized** in that the running-down of the pressure of the drive medium is programmed so as to be carried out within the time period (T₂-T₀, T₆-T₀), whose length is chosen in the range of 0.5...10 s, preferably in the range of 1...3 s.

3. A method as claimed in claim 2, **characterized** in that the pressure (p) of the drive medium of the turbine is programmed to be lowered, in the first stage (T₁-T₀), in a substantially linear way with a substantially higher angle coefficient (k₁) than in the final stage (T₂-T₀) (angle coefficient k₂) (Fig. 8A).

4. A method as claimed in claim 3, **characterized** in that, in the first stage, the pressure of the drive medium of the turbine is programmed to be lowered to a fraction (p₁) of the starting pressure (p₀) with an angle coefficient (k₁), which has been chosen in the range of k₁ ≈ -10...-3 bars/s, after which the pressure (p) of the drive medium of the turbine is lowered to the pressure (p₂) in the time period of T₂-T₁ ≈ 0.5...2.5 s with an angle coefficient k₂ ≈ -0.1...-0.5 bar/s whose absolute value is substantially lower (Fig. 8A).

5. A method as claimed in claim 1 or 2, **characterized** in that the pressure (p) of the drive medium of the turbine is programmed to be lowered from the starting pressure of p₀ ≈ 2...3 bars to the pressure p₂ ≈ 0.1...0.5 bar substantially exponentially (Fig. 8B).

6. A system of control intended for reducing the sucking-back in turbines operating by means of a pressure medium in a dental-treatment machine, in which system the drive medium is passed to one dental-treatment instrument (10) or to several dental-treatment instruments (10A,10B,10C) through a pressure regulation member (20) and in which system said pressure regulation member (20) is connected to a pressure regulation unit (21;22,23;21a,24;21A,21B,21C,25a,25b,25c), by whose means the pressure of the drive medium is arranged to be run down with a retarded run-down profile (p(t)) (Fig. 8A,8B) so that detrimental sucking-back does not occur, **characterized** in that the pressure regulation member (20) is connected with a pressure regulation unit (21), into which a certain pressure run-down profile p(t) has been stored or controlled (s₂) by means of programming.

7. A control system as claimed in claim 6, **characterized** in that the pressure regulation unit comprises, or is connected to, a microprocessor, into whose memory the run-down profile (p(t)) of the operating pressure of the turbine has been stored in table form or in an equivalent way.

8. A control system as claimed in claim 6 or 7, **characterized** in that the pressure regulation member (20) consists of a proportional pressure regulation valve.

9. A control system as claimed in any of the claim 6 to 8, **characterized** in that the inlet pipe (17) for the drive medium of the turbine of the dental-treatment instrument (10) is connected with a unit (23) for measurement of the pressure (p) of the drive medium, by means of which unit (23) a regulation amplifier (22) or equivalent is controlled, that the regulation amplifier (22) or equivalent is additionally controlled by means of the pressure regulation unit (21), and that the pressure regulation member (20) is controlled by means of the regulation signal (s₂) received from said regulation amplifier (22) (Fig. 5).

10. A control system as claimed in any of the claims 6 to 9, which is intended for preventing of sucking-back in a multi-instrument (10A,10B,10C) treatment machine, **characterized** in that the control system comprises a pressure regulation member (20), through which the operating pressure is passed to the different instruments (10A,10B,10C), that, in connection with the inlet and/or outlet pipes (17,18) for the operating pressure (p) of the different instruments (10A,10B,10C), pressure regulation members (25A,25B,25C) are fitted, which are controlled by means of the control signals (sₐ,s_{b},s_{c}) of the control unit (21A,21B,21C).

## Patentansprüche

1. Verfahren bei einem dentalen Behandlungsinstrument, welches eine Turbine aufweist, die mittels Druck (p) eines Antriebsmediums, wie z.B. Druckluft, betrieben wird, und welches das Werkzeug (16) des dentalen Behandlungsinstrumentes (10) rotiert, wobei bei dem Verfahren der Druck (p) des Antriebsmediums mit einem Verzögerungsprofil (p(t)) heruntergeregelt wird, um das Rücksaugen zu verhindern, welches aufgrund der Beibehaltung der Rotation des Turbinenrotors (15) in dem Instrument (10) in Verbindung mit dem Ausschalten des Drucks (p) des Antriebsmediums auftritt,
**dadurch gekennzeichnet,** daß
in die Einheit (21;22,23;21,24;21A,21B,21C,25a, 25b,25c) zum Regulieren des Drucks (p) des Antriebsmediums das verzögerte Herunterregelungsprofil (p(t)) des Drucks (p) des Antriebsmediums programmiert wird, wobei mittels des Profils das Druckregelelement (20) gesteuert wird, welches mit der Druck(p)-Einlaßleitung (17) des Antriebsmediums des dentalen Behandlungsinstrumentes verbunden ist.

2. Verfahren nach Anspruch 1,
**dadurch gekennzeichnet,** daß
das Herunterregeln des Drucks des Antriebsmediums so programmiert wird, daß es innerhalb des Zeitraums (T₂-T₀, T₆-T₀) durchgeführt wird, dessen Länge in dem Bereich zwischen 0,5...10 s, vorzugsweise im Bereich von 1...3 s gewählt wird.

3. Verfahren nach Anspruch 2,
**dadurch gekennzeichnet,** daß
der Druck (p) des Antriebsmediums der Turbine programmiert wird, um abgesenkt zu werden, und zwar im ersten Stadium (T₁-T₀) in einer im wesentlichen linearen Art und Weise mit einem im wesentlichen höheren Winkelkoeffizient (k₁) als im letzten Stadium (T₂-T₀) (Winkelkoeffizient k₂) (Fig. 8A).

4. Verfahren nach Anspruch 3,
**dadurch gekennzeichnet,** daß
im ersten Stadium der Druck des Antriebsmediums der Turbine so programmiert wird, um auf einem Bruchteil (p₁) des Anfangsdrucks (p₀) gesenkt zu werden, und zwar mit einem Winkelkoeffizienten (k₁), welcher in dem Bereich von k₁ ≈ -10...-3 bar/s gewählt worden ist, wonach der Druck (p) des Antriebsmediums der Turbine auf den Druck (p₂) gesenkt wird, und zwar in dem Zeitraum von T₂-T₁ ≈ 0,5...2,5 s mit einem Winkelkoeffizienten k₂ ≈ -0,1...-0,5 bar/s, dessen absoluter Wert im wesentlichen geringer ist (Fig. 8A).

5. Verfahren nach Anspruch 1 oder 2,
**dadurch gekennzeichnet,** daß
der Druck (p) des Antriebsmediums der Turbine programmiert wird, um von dem Anfangsdruck p₀ ≈ 2...3 bar auf den Druck p₂ ≈ 0,1...0,5 bar im wesentlichen exponentiell abgesenkt zu werden (Fig. 8B).

6. Regelungssystem, welches dafür vorgesehen ist, das Rücksaugen von Turbinen zu verhindern, welche mittels eines Druckmediums in einer dentalen Behandlungsmaschine arbeiten, wobei in dem System das Druckmedium zu einem dentalen Behandlungsinstrument (10) oder zu mehreren dentalen Behandlungsinstrumenten (10A,10B,10C) durch ein Druckregelelement (20) geführt wird, und wobei in dem System das Druckregelelement (20) mit einer Druckregeleinheit (21;22,23;21a,24;21A,21B,21C,25a,25b,25c) verbunden ist, mittels welchem der Druck des Antriebsmediums so eingerichtet ist, daß es mit einem verzögerten Herunterregelungsprofil (p(t)) (Fig. 8A,8B) herunterregelbar ist, so daß nachteiliges Rücksaugen nicht auftritt,
**dadurch gekennzeichnet,** daß
das Druckregelelement (20) mit einer Druckregeleinheit (21) verbunden ist, in welche ein bestimmtes Druck-Herunterregelungsprofil p(t) gespeichert worden ist oder mittels einer Steuerung gesteuert (s₂) wird.

7. Regelungssystem nach Anspruch 6,
**dadurch gekennzeichnet,** daß
die Druckregeleinheit einen Mikroprozessor aufweist oder mit einem selbigen verbunden ist, in dessen Speicher das Herunterregelungsprofil (p(t)) des Betriebsdruckes der Turbine gespeichert worden ist, und zwar in Tabellenform oder auf eine ähnliche Art und Weise.

8. Regelungssystem nach Anspruch 6 oder 7,
**dadurch gekennzeichnet,** daß
das Druckregelelement (20) aus einem Proportionaldruckregelventil besteht.

9. Regelungssystem nach einem der Ansprüche 6 bis 8,
**dadurch gekennzeichnet,** daß
die Einlaßleitung (17) für das Antriebsmedium der Turbine des dentalen Behandlungsinstrumentes (10) mit einer Einheit (23) zum Messen des Drucks (p) des Antriebsmediums verbunden ist, wobei mittels der Einheit (23) ein Regelungsverstärker (22) oder ähnliches gesteuert wird, daß der Regelungsverstärker (22) oder ähnliches zusätzlich mittels der Druckregeleinheit (21) gesteuert wird, und daß das Druckregelelement (20) mittels des von dem Regelungsverstärker (22) erhaltenen Regelsignals (s₂) gesteuert wird (Fig. 5).

10. Regelungssystem nach einem der Ansprüche 6 bis 9, welches zum Verhindern des Rücksaugens bei einer Vielfachinstrumenten(10A,10B,10C)-Behandlungsmaschine vorgesehen ist,
**dadurch gekennzeichnet,** daß
das Regelungssystem ein Druckregelelement (20) aufweist, durch welches der Betriebsdruck zu den verschiedenen Instrumenten (10A,10B,10C) geführt wird, und daß in Verbindung mit den Einlaß- und/oder Auslaßleitungen (17,18) für den Betriebsdruck (p) der verschiedenen Instrumente (10A,10B, 10C) Druckregelelemente (25A,25B,25C) angebracht sind, welche mittels der Steuersignale (sₐ,s_{b},s_{c}) der Steuereinheit (21A,21B,21C) gesteuert werden.

## Revendications

1. Un procédé dans un instrument de traitement dentaire qui comprend une turbine qui est actionnée au moyen de la pression (p) d'un milieu d'entraînement, comme de l'air comprimé et qui fait tourner l'outil (16) de l'instrument de traitement dentaire (10), dans lequel procédé la pression (p) du milieu d'entraînement est commandée avec un profil retardé (p(t) de façon à empêcher la contre-aspiration qui se produit en raison de la poursuite de la rotation du rotor de turbine (15) dans l'instrument (10) en liaison avec la décommutation de la pression (p) du milieu d'entraînement, caractérisé en ce que dans l'unité (21, 22, 23, 21, 24, 21A, 21B, 21C, 25a, 25b, 25c) pour la régulation de la pression (p) du milieu d'entraînement, ledit profil d'abaissement retardé (p(t)) de la pression (p) du milieu d'entraînement est programmé, au moyen duquel profil l'élément de régulation de pression (20) est commandé qui est relié à la pression (p) de la conduite d'entrée (17) du milieu d'entraînement de l'instrument de traitement dentaire.

2. Un procédé selon la revendication 1, caractérisé en ce que l'abaissement de la pression du milieu d'entraînement est programmé afin d'être mis en oeuvre dans la période de temps (T₁ - T₀, T₆ - T₀), dont la longueur est choisie dans la gamme de 0,5.... 10 s., de préférence dans la gamme de 1... 3 s.

3. Un procédé selon la revendication 2, caractérisé en ce que la pression (p) du milieu d'entraînement de la turbine est programmée afin d'être abaissée, dans la première étape (T₁-T₀) d'une façon essentiellement linéaire avec un coefficient angulaire sensiblement supérieur (k₁) que dans l'étape finale (T₂-T₀), le coefficient d'angle (k₂) (figure 8A).

4. Un procédé selon la revendication 3, caractérisé en ce que dans la première étape, la pression du milieu d'entraînement de la turbine est programmée de façon à être abaissée jusqu'à une fraction (p₁) de la pression de départ (p₀) avec un coefficient angulaire (k₁) qui a été choisi dans la gamme de k₁ ≅ -10... -3 bars/s. après quoi la pression (p) du milieu d'entraînement de la turbine est abaissée à la pression (p₂) dans la période de temps T₂-T₁ ≅ 0,5... 2,5 s. avec un coefficient d'angle k₂ ≅ -0,1... 0,5 bars/s. dont la valeur absolue est essentiellement inférieure (figure 8A).

5. Un procédé selon la revendication 1 ou 2, caractérisé en ce que la pression (p) du milieu d'entraînement de la turbine est programmée pour être abaissée de la pression de départ de pₒ ≅ 2... 3 bars à la pression p₂ ≅ 0,1... 0,5 bar de façon essentiellement exponentielle (figure 8B).

6. Un système de commande destiné à réduire la contre-aspiration dans les turbines fonctionnant au moyen d'un milieu de pression dans un instrument de traitement dentaire, dans lequel système le milieu d'entraînement traverse un instrument de traitement dentaire (10) ou plusieurs instruments de traitement dentaire (10A, 10B, 10C) au travers d'un élément de régulation de pression (20) et dans lequel système ledit élément de régulation de pression (20) est relié à une unité de régulation de pression (21, 22, 23, 21a, 24, 21A, 21B, 21C, 25a, 25b, 25c) par lequel moyen la pression du milieu d'entraînement est agencée pour être abaissée avec un profil d'abaissement retardé (p(t)) (figures 8A, 8B) si bien que la contre-aspiration nuisible ne se produit pas, caractérisé en ce que l'élément de régulation de pression (20) est relié à une unité de régulation de pression (21) dans laquelle un certain profil d'abaissement de pression p(t)) a été emmagasiné ou commandé (s₂) au moyen d'un programme.

7. Un système de commande selon la revendication 6, caractérisé en ce que l'unité de régulation de pression comprend ou est reliée à un microprocesseur dans la mémoire duquel le profil d'abaissement (p(t)) de la pression de fonctionnement de la turbine a été emmagasiné sous une forme de table ou d'une façon équivalente.

8. Un système de commande selon l'une des revendications 6 ou 7, caractérisé en ce que l'élément de régulation de pression (20) se compose d'une soupape de régulation de pression proportionnelle.

9. Un système de commande selon l'une quelconque des revendications 6 à 8, caractérisé en ce que la conduite d'entrée (17) pour le milieu d'entraînement de la turbine de l'instrument de traitement dentaire (10) est reliée à une unité (23) pour mesurer la pression (p) du milieu d'entraînement, unité (23) au moyen de laquelle un amplificateur de régulation (22) ou équivalent est commandé si bien que l'amplificateur de régulation (22) ou moyen équivalent est commandé de façon supplémentaire au moyen de l'unité de régulation de pression (21) et en ce que l'élément de régulation de pression (20) est commandé au moyen du signal de régulation (s₂) reçu à partir dudit amplificateur de régulation (22) (fig. 5).

10. Un système de commande selon l'une quelconque des revendications 6 à 9, qui est destiné à empêcher la contre-aspiration dans une machine de traitement à plusieurs instruments (10A, 10B, 10C), caractérisé en ce que le système de commande comprend un élément de régulation de pression (20) au travers duquel la pression d'actionnement passe aux différents instruments (10A, 10B, 10C) et en ce que des éléments de régulation de pression (25A, 25B, 25C) sont prévus en liaison avec les conduites d'entrée et/ou de sortie (17, 18) pour la pression d'actionnement (p) des différents instruments (10A, 10B, 10C), lesquels éléments de régulation sont commandés au moyen des signaux de commande (sₐ, s_{b}, s_{c}) de l'unité de commande (21A, 21B, 21C).
